# EUROPEAN PATENT SPECIFICATION

(11) **EP 0 963 051 B1**
(45) Date of publication and mention of the grant of the patent: **30.03.2005**
(21) Application number: 99201570.1
(22) Date of filing: 19.05.1999
(51) Int. Cl.: H04B 1/10, H04B 15/00

(54) **Wireless communication system operating in 2.4 to 2.5 GHz band**
Drahtloses Kommunikationssystem für die 2.4 bis 2.4 GHz Bande
Système de communication sans fil pour la bande 2.4 à 2.5 GHz

(30) Priority: 02.06.1998 US 89204
(43) Date of publication of application: 08.12.1999
(73) Proprietor: Appairent Technologies, Inc., West Henrietta, New York 14586 (US)
(72) Inventor: Carlson, Grant B., Eastman Kodak Company, Rochester, New York 14650-2201 (US)
(74) Representative: Dendorfer, Claus, Dr.

(56) References cited:
- US-A- 5 574 979

## Description

### FIELD OF THE INVENTION

This invention relates to a digital wireless communication system operating in the 2.4 to 2.5 GHz ISM (Industrial Scientific and Medical) Band. Such a system is useful, for example, for communicating digital imaging data at high data rates; e.g. rates equal and greater than 10 Mega bits per second (Mbps).

### BACKGROUND OF THE INVENTION

With the advent of digital photography, the wireless transmission of digital images, for example between a transmitting device like a digital camera and a receiving device such as a personal computer or other image appliance such as a printer, has become a desirable feature. High data rate transmissions are desirable because digital images represent a large amount of data and short transmission times are needed. Short transmission times result in shorter wait times while an image is being transferred from a camera to a receiver and in reduced battery power consumption.

An attractive communication band for such a digital communication system is the 2.4 to 2.5 GHz ISM Band since the band is unlicensed and available internationally. However, a major problem exists with the use of this band for wireless communication. The band is allocated for microwave ovens, which as described below, generate a great deal of noise in the band.

Radio frequency (RF) transmissions in the 2.4 to 2.5 GHz ISM Band have historically had to deal with the presence of man-made noise from microwave ovens that predominately operate in the center of this band at 2.45 GHz. The noise emanates from the oven by leakage through the enclosure of the oven. The leakage noise has a radiated output power approximately 20 dB greater in strength than that allowed by the FCC for operation of Part 15 non spread spectrum radios (i.e. 10 milliWatts). With over 200 million microwave ovens in use throughout the world, they are by far the greatest and most significant source of noise in this band. Some examples of locations where it would be desirable to transmit images in the presence of microwave oven noise are in the home (particularly in the kitchen), or in a supermarket or department store where a photo kiosk may be located near a microwave oven.

One possible way to avoid the microwave noise in the 2.4 to 2.5 GHz ISM Band is to use a spread spectrum technique to spread the signal over a band which is much larger than the bandwidth of the signal so that the narrow band noise from the microwave ovens has a reduced effect on the demodulated signal to noise ratio. This technique however is relatively expensive to implement, significantly limits the data throughput (e.g. by a factor of 8 or more) and does not work well if the receiver is very close to the microwave oven.

There is a need therefore for an improved means of digital communication in the 2.4 to 2.5 GHz ISM band.

U.S. Patent 5,574,979 discloses an hierarchical communication system in which periodic interference can be detected and avoided. A sync signal is used that allows radio frequency communication to be timed to efficiently make use of the interference-free time within the periodic interference. The sync signal is obtained by either sensing a 60 Hz signal radiated from the AC power mains or directly sensing the AC power line.

### SUMMARY OF THE INVENTION

The problem is solved according to the present invention by providing a system of digital communication operating in the 2.4 to 2.5 GHz ISM Band in the presence of noise from a microwave oven that detects quiescent periods in the microwave noise and communicates during the quiescent periods.

The present invention is defined by the independent claims. The dependent claims define preferred embodiments of the present invention.

### ADVANTAGES OF THE INVENTION

The advantages of the present invention are:
1. The RF link does not have to change frequency or use any correlation techniques in order to mitigate the microwave oven noise.
2. The software and clock synchronization circuitry required to execute the off duty cycle transfer has significant cost savings and smaller size requirements than the expensive and bulky circuitry currently used for the prior art spread spectrum techniques described above.
3. During the presence of 50% duty cycle microwave oven noise, image data transfer can be maintained at an average rate of approximately 10 Mbps in as many as four 20 MHz channels simultaneously using simple FSK (Frequency Shift Key) modulation.
4. Using QPSK (Quadrature Phase Shift Key) modulation, 20 Mbps can be maintained as an average rate in each of the 4 separate 20 MHz channels supported by this band. Four channels are supported in many countries, and particularly in the USA. Four systems, each using one channel, can all use the same method simultaneously.

### BRIEF DESCRIPTION OF THE DRAWINGS

Fig. 1 is a plot of RF noise produced by a microwave oven;
Fig. 2 is a block diagram of a transceiver according to the present invention;
Fig. 3 is a block diagram of the microwave oven noise detection circuit; and
Fig. 4 is a plot of the sync clock signal generated by the microwave oven noise detection circuit.

### DETAILED DESCRIPTION OF THE INVENTION

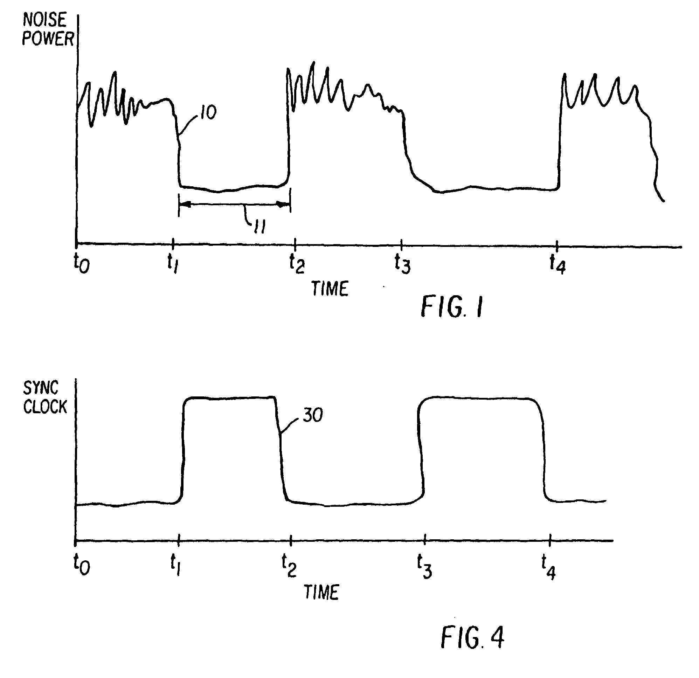

In addressing the above problem, it is understood that the noise produced by a microwave oven is periodic at a frequency based on the AC power line voltage frequency. Referring to Fig. 1, the noise energy waveform 10 produced by a microwave oven is shown. The source of the RF noise energy is the magnetron within the microwave oven, which is driven by the AC power line. The output noise spectrum is pulsed at approximately a 50% duty cycle synchronized to the AC line voltage. The frequency of the microwave noise energy in North American is 60 Hertz. According to the present invention, this pulsed noise is detected and communication is conducted during the quiescent periods, that is during the periods 11 when the microwave oven is off.

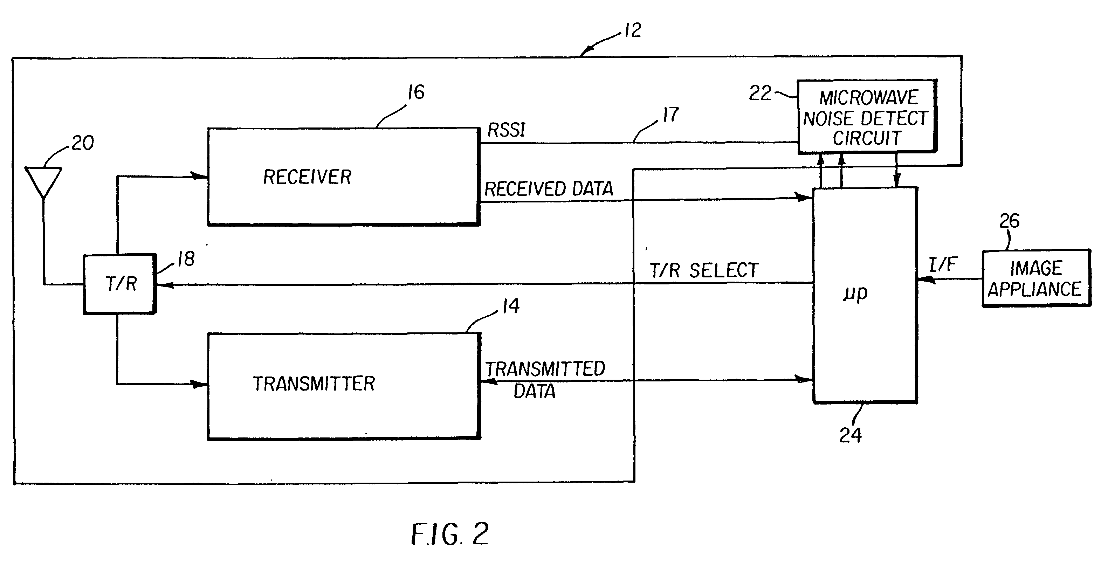

Referring to Fig. 2, a system for communicating digital data according to the present invention includes a transceiver 12 for communicating in the presence of microwave oven. The transceiver includes a transmitter 14, a receiver 16, and a transmit/receive switch 18 that selectively connects an antenna 20 to the transmitter or the receiver. The transmitter 14 is a standard design 2.4 to 2.5 GHz transmitter employing any known modulation scheme such as FSK or QPSK. The receiver 16 is a standard design 2.4 to 2.5 GHz receiver with the capability of demodulating a 20 Mbps FSK or a 40 Mbps QPSK signal. The demodulator in the receiver 16 is for example a Motorola MC13155 integrated circuit. The transceiver 12 also includes a microwave noise detect circuit 22 connected to the RSSI 17 (Receive Signal Strength Indicator) of the receiver 16.

The transceiver 12 is controlled by a microprocessor 24. The microprocessor 24 may for example be a microprocessor that is also used to control an image appliance 26 (i.e. camera, printer, kiosk, or personal computer), or may be a microprocessor that is specifically supplied with the communication system. The microprocessor 24 controls the transmit/receive switch 18, prepares the data from the image appliance 26 to be transmitted by transmitter 14, and receives the data from the receiver 16 to supply received data to the image appliance 26.

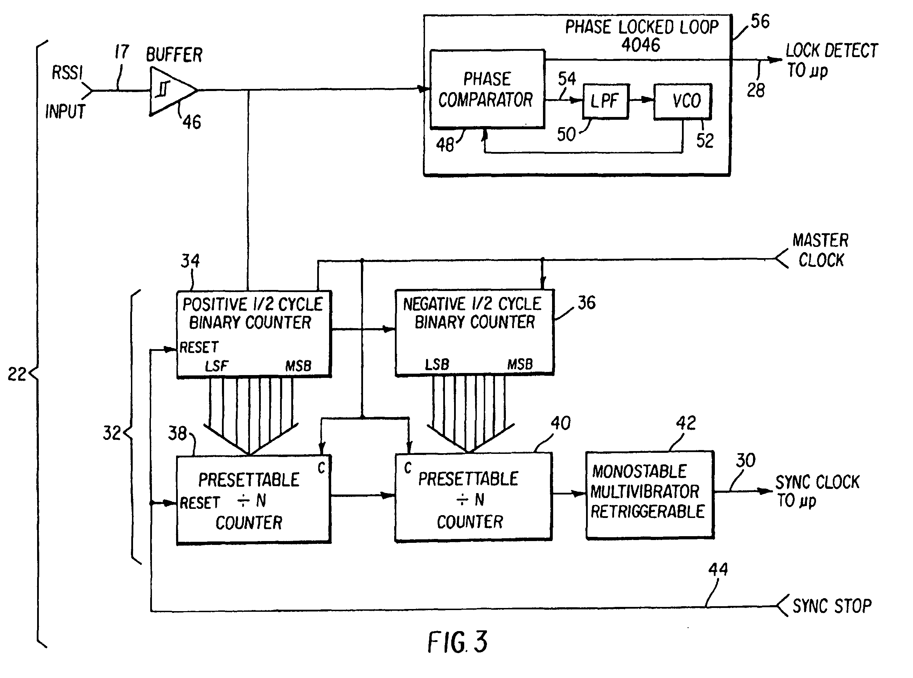

Referring to Fig. 3, microwave noise detect circuit 22 uses the RSSI signal 17 from the receiver 16 to generate a sync clock 30 and a Lock detect 28 signal as described below, which are supplied to the microprocessor 24 for controlling the communication of data during quiescent periods in the microwave oven noise 10. The main function of this circuitry 22 is to lock on to the envelope of the microwave oven noise 10 using the AM detector in the RSSI circuitry (not shown) to generate a Lock detect signal 28 and a synchronization (Sync) clock 30 for the microprocessor.

The Lock detect signal 28 informs the microprocessor 24 that a 60 Hertz microwave oven noise signature is present. To generate the Lock detect signal 28, the RSSI 17 input signal coming from the receiver is first buffered 46 and provided both to a phase locked loop circuit 56 and sync clock generator circuitry 32. The phase locked loop circuit 56 consists of a Voltage Controlled Oscillator (VCO) 52, a Phase Comparator 48 that produces a phase error output signal 54 and a Low Pass loop Filter (LPF) 50. The circuit is designed to provide a Lock detect signal 28 if it is supplied with a 50 to 120 Hertz RSSI signal 17. The circuit is commercially available in integrated circuit form from manufacturers such as Motorola. A commonly used part number is CD4046.

Fig. 4 shows the Sync clock signal 30 referenced to the microwave oven noise energy in Fig. 1. Sync clock signal 30 is generated separately from Lock detect signal 28 using sync clock generator circuitry 32. Sync clock signal 30 is identical to the RSSI 17 signal in its pulse width, frequency and duty cycle. It is used to predict when the microwave oven will be in the quiescent state. This detect and latch process is necessary since the RSSI 17 signal will not be able to separate the microwave oven noise from the transceiver activity, once data communications commences. Binary counters 34, 36 sample the RSSI 17 high and low periods and load the result into pre-setable counters 38, 40. Once the data is loaded, the Sync clock 30 is generated by monostable multivibrator 42 without the microwave signature provided by the RSSI signal 17. The Sync clock 30 is provided to the microprocessor 24 and is used to enable the transmitting of the image data only during the predicted quiescent or "off' periods 11 in the microwave oven's noise signature. The Sync clock 30 continues to run until the microprocessor determines it is no longer needed, or that it has shifted in phase. The microprocessor then signals the Sync clock to stop using the Sync stop control signal 44.

Phase shifting can be caused by noise from multiple microwave ovens in different power phases. If three ovens are on simultaneously using three different AC phases, the RSSI signal will be high the entire AC cycle and there will be no Lock detect signal 28. The microprocessor 24 will cause the transceiver to search for a quiet channel. Once a lock is established however, the microprocessor 24 knows when to stop using the Sync clock either when the receiver at the far end signals the transmitter that the microwave oven noise has stopped and it has verified the noise has stopped by listening, or its Lock detect 28 goes high again synchronous with the Sync clock signal 30, indicating that the oven noise is gone, and the transmitter is causing its own lock detect signal.

This approach works for different AC line frequencies, and works even if there are multiple ovens, or ovens on at least two phases of an AC distribution system.

The invention has been described in detail with particular reference to certain preferred embodiments thereof, but it will be understood that variations and modifications can be effected within the scope of the invention as defined by the claims.

### PARTS LIST

- 10: microwave oven noise energy waveform
- 11: quiescent (off) period
- 12: transceiver
- 14: transmitter
- 16: receiver
- 17: Receive Signal Strength Indicator (RSSI)
- 18: transmit/receive switch
- 20: antenna
- 22: microwave noise detect circuit
- 24: microprocessor
- 26: imaging appliance
- 28: Lock detect signal
- 30: Sync clock signal
- 32: Sync clock circuitry
- 34: binary counter
- 36: binary counter
- 38: pre-setable counter
- 40: pre-setable counter
- 42: monostable multivibrator
- 44: Sync Stop signal
- 46: buffer
- 48: phase comparator
- 50: low pass loop filter
- 52: Voltage Controlled Oscillator
- 54: phase error signal
- 56: phase locked loop

## Claims

1. A wireless communication system operating in the 2.4 to 2.5 GHz band in the presence of noise from a microwave oven, the communication system including a transmitter (14) and a receiver (16), the receiver (16) outputting an RSSI signal (17) indicating a receive signal strength, the communication system comprising:
a) means for detecting quiescent periods (11) in the microwave oven noise; and
b) means that use a sync clock signal (30) for controlling the transmitter (12) to transmit only during the quiescent periods (11);
**characterized in that** the means for detecting the quiescent periods (11) in the microwave oven noise comprise a microwave noise detect circuit (22) that uses the RSSI signal (17) to generate the sync clock signal (30).

2. The wireless communication system claimed in claim 1, wherein the means for detecting quiescent periods (11) in the microwave noise further comprises:
means for generating a lock detect signal (28) for recognizing the AC line frequency characteristics of microwave oven energy from the detected amplitude.

3. The wireless communication system claimed in claim 1 or claim 2, wherein the sync clock signal (30) is used to predict when the microwave oven will be in the quiescent state.

4. The wireless communication system claimed in one of claims 1 to 3, further comprising:
means for continuing to generate the sync clock signal (30) even when the microwave oven noise cannot be separated from the transmitter activity, and
means responsive to the sync clock signal (30) for enabling the transmitter (14) to transmit when it predicts the oven is in a quiescent state, thereby making the transmission process efficient.

5. A method of operating a wireless communication system in the 2.4 to 2.5 GHz band in the presence of noise from a microwave oven, the communication system including a transmitter (14) and a receiver (16), the receiver (16) outputting an RSSI signal (17) indicating a receive signal strength, the method comprising the steps of:
a) detecting quiescent periods (11) in the microwave oven noise; and
b) using a sync clock signal (30) for controlling the transmitter (12) to transmit only during the quiescent periods (11);
**characterized in that** the RSSI signal (17) is used to generate the sync clock signal (30).

6. The method claimed in claim 5, further comprising the step of:
recognizing the AC line frequency characteristics of microwave oven energy from the detected amplitude, using a phase lock loop, to generate a lock detect signal (28).

7. The method claimed in claim 5 or claim 6, wherein the sync clock signal (30) is used to predict when the microwave oven will be in the quiescent state.

8. The method claimed in one of claims 5 to 7, further comprising the steps of:
continuing to generate the sync clock signal (30) even when the microwave oven noise cannot be separated from the transmitter activity, and
employing the generated sync clock signal (30) to enable the transmitter (14) to transmit when it predicts the oven is in a quiescent state, thereby making the transmission process efficient.

## Patentansprüche

1. Ein System zur drahtlosen Kommunikation, das im 2,4- bis 2,5-GHz-Band in Anwesenheit von Störungen von einem Mikrowellenherd arbeitet, wobei das Kommunikationssystem einen Sender (14) und einen Empfänger (16) aufweist und der Empfänger (16) ein eine Empfangssignalstärke anzeigendes RSSI-Signal (17) ausgibt, und wobei das Kommunikationssystem aufweist:
a) eine Einrichtung zum Erkennen von Ruhezeiträumen (11) in den durch den Mikrowellenherd erzeugten Störungen; und
b) eine Einrichtung, die ein Synchronisationstaktsignal (30) verwendet, um den Sender (12) so zu steuern, dass dieser nur während der Ruhezeiträume (11) sendet;
**dadurch gekennzeichnet, dass** die Einrichtung zum Erkennen der Ruhezeiträume (11) in den durch den Mikrowellenherd verursachten Störungen eine Erkennungsschaltung (22) für Mikrowellenstörungen aufweist, die das RSSI-Signal (17) verwendet, um das Synchronisationstaktsignal (30) zu erzeugen.

2. Das System zur drahtlosen Kommunikation gemäß Anspruch 1, bei dem die Einrichtung zum Erkennen der Ruhezeiträume (11) in den Mikrowellenstörungen ferner aufweist:
eine Einrichtung zum Erzeugen eines Einrast-Erkennungssignals (28), um die Wechselspannungsleitungs-Frequenzeigenschaften der Mikrowellenherdenergie aus der ermittelten Amplitude zu erkennen.

3. Das System zur drahtlosen Kommunikation gemäß Anspruch 1 oder Anspruch 2, bei dem das Synchronisationstaktsignal (30) verwendet wird, um vorherzusagen, wann sich der Mikrowellenherd im Ruhezustand befinden wird.

4. Das System zur drahtlosen Kommunikation gemäß einem der Ansprüche 1 bis 3, ferner umfassend:
eine Einrichtung zum Fortsetzen des Erzeugens des Synchronisationstaktsignals (30) auch dann, wenn die durch den Mikrowellenherd verursachten Störungen von der Aktivität des Senders nicht unterschieden werden können, und
eine Einrichtung, die auf das Synchronisationstaktsignal (30) anspricht, um den Sender (14) zum Senden freizugeben, wenn vorhergesagt wird, dass sich der Herd in einem Ruhezustand befindet, wodurch der Sendevorgang effizient ausgestaltet wird.

5. Ein Verfahren zum Betrieb eines Systems zur drahtlosen Kommunikation, wobei das System im 2,4- bis 2,5-GHz-Band in Anwesenheit von Störungen von einem Mikrowellenherd arbeitet und das Kommunikationssystem einen Sender (14) und einen Empfänger (16) aufweist und der Empfänger (16) ein eine Empfangssignalstärke anzeigendes RSSI-Signal (17) ausgibt, und wobei das Verfahren die Schritte aufweist:
a) Erkennen von Ruhezeiträumen (11) in den durch den Mikrowellenherd erzeugten Störungen; und
b) Verwenden eines Synchronisationstaktsignals (30), um den Sender (12) so zu steuern, dass dieser nur während der Ruhezeiträume (11) sendet;
**dadurch gekennzeichnet, dass** das RSSI-Signal (17) verwendet wird, um das Synchronisationstaktsignal (30) zu erzeugen.

6. Das Verfahren gemäß Anspruch 5, ferner mit dem Schritt:
Erkennen der Wechselspannungsleitungs-Frequenzeigenschaften der Mikrowellenherdenergie aus der ermittelten Amplitude unter Verwendung eines PLL-Kreises (*phase locked loop*), um ein Einrast-Erkennungssignal (28) zu erzeugen.

7. Das Verfahren gemäß Anspruch 5 oder Anspruch 6, bei dem das Synchronisationstaktsignal (30) verwendet wird, um vorherzusagen, wann sich der Mikrowellenherd im Ruhezustand befinden wird.

8. Das Verfahren gemäß einem der Ansprüche 5 bis 7, ferner mit den Schritten:
Fortsetzen des Erzeugens des Synchronisationstaktsignals (30) auch dann, wenn die durch den Mikrowellenherd verursachten Störungen von der Aktivität des Senders nicht unterschieden werden können, und
Verwenden des erzeugen Synchronisationstaktsignals (30), um den Sender (14) zum Senden freizugeben, wenn vorhergesagt wird, dass sich der Herd in einem Ruhezustand befindet, wodurch der Sendevorgang effizient ausgestaltet wird.

## Revendications

1. Système de communication sans fil fonctionnant dans la bande de 2,4 à 2,5 GHz en présence de bruit d'un four à micro-ondes, le système de communication comprenant un émetteur (14) et un récepteur (16), le récepteur (16) délivrant un signal RSSI (17) indiquant une intensité de signal reçue, le système de communication comprenant :
a) des moyens pour détecter des périodes de quiescence (11) dans le bruit du four à micro-ondes ; et
b) des moyens qui utilisent un signal d' horloge de synchronisation (30) pour contrôler l'émetteur (12) pour qu'il transmette uniquement au cours des périodes de quiescence (11) ;
**caractérisé en ce que** les moyens pour détecter les périodes de quiescence (11) dans le bruit du four à micro-ondes comprennent un circuit de détection de bruit micro-onde (22) qui utilise le signal RSSI (17) pour générer le signal d'horloge de synchronisation (30).

2. Système de communication sans fil revendiqué dans la revendication 1, dans lequel les moyens pour détecter les périodes de quiescence (11) dans le bruit micro-onde comprennent en outre :
des moyens pour générer un signal de détection de verrouillage (28) pour reconnaître les caractéristiques de fréquence de ligne AC de l'énergie du four à micro-ondes à partir de l'amplitude détectée.

3. Système de communication sans fil revendiqué dans la revendication 1 ou dans la revendication 2, dans lequel le signal d'horloge de synchronisation (30) est utilisé pour prédire quand le four à micro-ondes sera dans l'état de quiescence.

4. Système de communication sans fil revendiqué dans une des revendications 1 à 3, comprenant en outre :
des moyens pour continuer à générer le signal d'horloge de synchronisation (30) même lorsque le bruit du four à micro-ondes ne peut être séparé de l'activité de l'émetteur, et
des moyens qui réagissent au signal d'horloge de synchronisation (30) pour permettre à l'émetteur (14) de transmettre lorsqu'il prédit que le four est dans un état de quiescence, rendant par ce moyen le processus de transmission efficace.

5. Procédé de fonctionnement d'un système de communication sans fil dans la bande de 2,4 à 2, 5 GHz en présence de bruit provenant d'un four à micro-ondes, le système de communication comprenant un émetteur (14) et un récepteur (16), le récepteur (16) délivrant un signal RSSI (17) indiquant une intensité de signal reçue, le procédé comprenant les étapes consistant à :
a) détecter des périodes de quiescence (11) dans le bruit du four à micro-ondes ; et
b) utiliser un signal d'horloge de synchronisation (30) pour contrôler l'émetteur (12) pour qu'il transmette uniquement au cours des périodes de quiescence (11) ;
**caractérisé en ce que** le signal RSSI (17) est utilisé pour générer le signal d'horloge de synchronisation (30).

6. Procédé revendiqué dans la revendication 5, comprenant en outre l'étape consistant à :
reconnaître les caractéristiques de fréquence de ligne AC de l'énergie du four à micro-ondes à partir de l'amplitude détectée, en utilisant une boucle à verrouillage de phase, pour générer un signal de détection de verrouillage (28).

7. Procédé revendiqué dans la revendication 5 ou la revendication 6, dans lequel le signal d'horloge de synchronisation (30) est utilisé pour prédire quand le four à micro-ondes sera dans l'état de quiescence.

8. Procédé revendiqué dans une des revendications 5 à 7, comprenant en outre les étapes consistant à :
continuer à générer le signal d'horloge de synchronisation (30) même lorsque le bruit du four à micro-ondes ne peut être séparé de l'activité de l'émetteur, et
employer le signal d'horloge de synchronisation (30) généré pour permettre à l'émetteur (14) de transmettre lorsqu'il prédit que le four est dans un état de quiescence, rendant par ce moyen le processus de transmission efficace.
